# EUROPÄISCHE PATENTSCHRIFT

(11) **EP 2 238 339 B1**
(45) Veröffentlichungstag und Bekanntmachung des Hinweises auf die Patenterteilung: **16.08.2017**
(21) Anmeldenummer: 08868635.7
(22) Anmeldetag: 12.11.2008
(51) Int. Cl.: F02N 11/08, B60W 20/00, B60W 30/18, B60W 50/02, B60W 10/02, B60W 10/08

(54) **VERFAHREN ZUM BETREIBEN EINER HYBRIDANTRIEBSVORRICHTUNG**
METHOD FOR OPERATING A HYBRID DRIVE DEVICE
PROCÉDÉ POUR FAIRE FONCTIONNER UN DISPOSITIF D'ENTRAÎNEMENT HYBRIDE

(30) Priorität: 27.12.2007 DE 102007062796
(43) Veröffentlichungstag der Anmeldung: 13.10.2010
(73) Patentinhaber: Robert Bosch GmbH, 70442 Stuttgart (DE)
(72) Erfinder: FALKENSTEIN, Jens-Werner, 73434 Aalen (DE)
(86) Internationale Anmeldenummer: PCT/EP2008/065348
(87) Internationale Veröffentlichungsnummer: WO 2009/083325

(56) Entgegenhaltungen:
- EP-A- 1 505 309
- EP-A- 2 008 899
- DE-A1- 4 037 092
- DE-A1- 4 239 711
- DE-A1- 19 504 935
- DE-A1-102006 008 640

## Beschreibung

Die Erfindung betrifft ein Verfahren zum Betreiben einer Hybridantriebsvorrichtung, insbesondere für ein Kraftfahrzeug, die mindestens einen Verbrennungsmotor und mindestens eine elektrische Maschine aufweist, wobei der Verbrennungsmotor und die elektrische Maschine mittels einer Trennkupplung mechanisch miteinander wirkverbindbar sind und ein von der Trennkupplung übertragenes Schlupf-Drehmoment ermittelt wird.

### Stand der Technik

Aus dem Stand der Technik sind mittlerweile eine Vielzahl von Verfahren zum Betreiben einer Hybridantriebsvorrichtung, die mindestens einen Verbrennungsmotor und mindestens eine elektrische Maschine aufweist, bekannt. Der Verbrennungsmotor und die elektrische Maschine sind bei derartigen Hybridantriebsvorrichtungen in der Regel mittels einer Trennkupplung mechanisch miteinander wirkverbindbar. Bei dem sogenannten Parallel-Hybrid werden die Abtriebswelle des Verbrennungsmotors und eine Eingangswelle der elektrischen Maschine mittels der Trennkupplung miteinander wirkverbunden. Die Trennkupplung ist dabei von der Fahrzeugsteuerung beeinflussbar. Durch entsprechendes Betätigen der Trennkupplung ist neben den Betriebsarten hybridisch Fahren, Boostbetrieb und Rekuperation auch rein elektrisches Fahren möglich, wobei bei Letzterem die Trennkupplung geöffnet und der Verbrennungsmotor in der Regel ausgeschaltet beziehungsweise gestoppt ist. Mittels der Fahrzeugsteuerung ist es möglich, das von der Trennkupplung im schlupfenden Zustand aktuell übertragene Moment beziehungsweise Schlupf-Drehmoment zu beeinflussen, zum Beispiel durch Einstellen der Anpresskraft an Kupplungsreibbelägen. Bei Auftreten des Schlupf-Drehmoments laufen die elektrische Maschine und der Verbrennungsmotor mit unterschiedlichen Drehzahlen, sodass ein Schlupf in der Trennkupplung vorliegt. Ein vorgegebenes Schlupf-Drehmoment entspricht nur selten dem von der Trennkupplung tatsächlich übertragenen Schlupf-Drehmoment, da variierende Reibkoeffizienten der Kupplungsbeläge in Folge von Verschleiß oder Temperaturänderungen, hydraulische beziehungsweise mechanische Ungenauigkeiten im Betätigungssystem der Trennkupplung, Hysteresen, Signallaufzeiten, Alterung und ähnliche Vorgänge Ungenauigkeiten in der Ansteuerung erzeugen. Der Zeitpunkt, ab wann beim Schließen der Trennkupplung ein Drehmoment übertragen wird, ist daher ebenfalls mit Unsicherheiten behaftet.

Das tatsächlich übertragende Schlupf-Drehmoment ist jedoch von Bedeutung für den Betrieb der Hybridantriebsvorrichtung. Insbesondere beim Start des Verbrennungsmotors aus dem rein elektrischen Fahren heraus, welcher durch Schließen der Trennkupplung während der Fahrt erfolgt, das heißt bei drehender elektrischen Maschine und zunächst stillstehendem Verbrennungsmotor, wird der Verbrennungsmotor über die Trennkupplung angeschleppt. Die elektrische Maschine, die direkt oder über ein Getriebe auf Antriebsräder des Kraftfahrzeugs wirkt, wird beim Schließen der Trennkupplung durch das übertragene Schlupf-Drehmoment beeinflusst. Dies kann zu einem Einbruch der Drehzahl der Elektromaschine führen. Daneben kann beispielsweise beim Hochlaufen des Verbrennungsmotors in Folge der ersten Zündung eine Überschwingung der Verbrennungsmotorzahl erfolgen, die zu einer temporären Erhöhung der Drehzahl der elektrischen Maschine führt. Dieses wirkt sich auf den restlichen Antriebsstrang und insbesondere auf die Antriebsräder aus, wodurch der Fahrkomfort beeinträchtigt wird. Durch Kenntnis des übertragenen Schlupf-Drehmoments wäre es jedoch unter Anderem möglich derartige Beeinflussungen zu kompensieren oder zu verhindern.

Zur Erfassung des tatsächlich übertragenen Schlupf-Drehmoments ist es hierbei beispielsweise bekannt, dieses mit Hilfe eines entsprechenden Momentensensors zu messen. Dies ist jedoch kostspielig und bedarf eines entsprechenden Bauraums.

Die Offenlegungsschrift DE 10 2006 008640 A1 beschreibt ein Verfahren zum Betreiben eines Hybridantriebs, bei welchem der Verbrennungsmotor aus einem Betriebsmodus "rein elektrisches Fahren" des Hybridantriebs mittels eines starterlosen Direktstarts gestartet werden kann. Bei vorliegender Direkt-Startbereitschaft des Verbrennungsmotors wird dieser bei geöffneter Trennkupplung gestartet. Bei nicht vorliegender Direkt-Startbereitschaft überträgt eine schlupfmomentgeregelte Trennkupplung ein Motorschleppmoment an den Verbrennungsmotor. Die Offenlegungsschrift EP 1 505 309 A2 beschreibt ein Verfahren zur Überwachung eines Antriebsaggregats eines Fahrzeugs, welches eine automatische Getriebekupplung aufweist.

### Offenbarung der Erfindung

Das erfindungsgemäße Verfahren schlägt vor, dass das Schlupf-Drehmoment in Abhängigkeit vom Drehzahlverlauf einer Abtriebswelle, insbesondere Kurbelwelle, des Verbrennungsmotors zumindest beim Starten und/oder Stoppen des Verbrennungsmotors bestimmt und beim Betreiben der Hybridantriebsvorrichtung berücksichtigt wird. Insbesondere beim Starten des Verbrennungsmotors wird die Drehzahl der Abtriebswelle des Verbrennungsmotors durch das Schlupf-Drehmoment maßgebend beeinflusst. Der Drehzahlverlauf der Abtriebswelle des Verbrennungsmotors lässt somit auf das übertragene Schlupf-Drehmoment zurückschließen. Das so ermittelte Schlupf-Drehmoment kann dann beim Betreiben der Hybridantriebsvorrichtung entsprechend berücksichtigt werden. Durch das erfindungsgemäße Verfahren wird auf besonders einfache Art und Weise die Bestimmung des Schlupf-Drehmoments erreicht, wobei bereits vorhandene Drehzahlsensoren verwendet werden können. Der Drehzahlverlauf der Abtriebswelle des Verbrennungsmotors kann dabei zum Beispiel an der Abtriebswelle direkt oder an der Nockenwelle, aber auch anhand der Drehzahl eines Nebenaggregates ermittelt werden.

Vorteilhafterweise werden aus dem Drehzahlverlauf der Abtriebswelle des Verbrennungsmotors eine Winkelgeschwindigkeit und/oder eine Winkelbeschleunigung bestimmt. Bevorzugt werden zur Ermittlung, ob ein Schlupf-Drehmoment vorliegt, die Drehzahlen (der Abtriebswelle) des Verbrennungsmotors und der elektrischen Maschine miteinander verglichen. Ab einem vorgebbaren Drehzahldifferenz-Grenzwert wird von einem Schlupf in der Trennkupplung ausgegangen.

Nach einer Weiterbildung der Erfindung wird das Schlupf-Drehmoment in Abhängigkeit von einem von der Massenträgheit von beschleunigten Massen des Verbrennungsmotors bewirkten Beschleunigungsmoment bestimmt. Insbesondere beim Starten des Verbrennungsmotors kommt die Massenträgheit der im Verbrennungsmotor beschleunigten Massen, wie zum Beispiel die Massenträgheit der Abtriebswelle, eines Schwungrads und/oder von Kolben des Verbrennungsmotors, zum Tragen. Das durch die beschleunigten Massen bewirkte Beschleunigungsmoment bildet somit einen Teil des beim Start von der Trennkupplung auf den Verbrennungsmotor übertragenen Schlupf-Drehmoments, der sich auf den Drehzahlverlauf der Abtriebswelle des Verbrennungsmotors auswirkt.

Erfindungsgemäß ist vorgesehen, dass das Schlupf-Drehmoment in Abhängigkeit von einem Kompressionsmoment des Verbrennungsmotors bestimmt wird. Beim Andrehen der Abtriebswelle des Verbrennungsmotors erfolgen in den einzelnen Zylindern entsprechend Kompressionen, die das Schlupf-Drehmoment der Trennkupplung beziehungsweise den Drehzahlverlauf ebenfalls beeinflussen. Insbesondere die zuerst komprimierenden Zylinder sind für das Kompressionsmoment des Verbrennungsmotors verantwortlich. Kurz nach dem Andrehen der Abtriebswelle des Verbrennungsmotors verringert sich das Kompressionsmoment erheblich, da die nachfolgenden Zylinder für ihre Kompression die bei den Dekompressionen der vorausgegangenen Zylindern frei werdende Energie nutzen.

Ferner ist vorgesehen, dass das Schlupf-Drehmoment in Abhängigkeit von einem Verlustmoment des Verbrennungsmotors bestimmt wird. Das Verlustmoment des Verbrennungsmotors, insbesondere beim Drehen der Abtriebswelle, also im Schleppbetrieb, wird durch interne mechanische Reibungen und durch Ladungswechselverluste im Verbrennungsmotor erzeugt. Es ist dabei abhängig von aktuellen Betriebsparametern des Verbrennungsmotors, wie zum Beispiel von der Temperatur eines Schmieröls des Verbrennungsmotors oder eines Saugrohrdrucks. Vorteilhafterweise wird das Verlustmoment über die Winkelgeschwindigkeit in einem Kennfeld (eines Steuergeräts der Hybridantriebsvorrichtung) hinterlegt. Dabei werden bevorzugt die weiteren Betriebsparameter (z.B. Öltemperatur) ebenfalls berücksichtigt. Das Verlustmoment muss somit vor Inbetriebnahme der Hybridantriebsvorrichtung ermittelt und dann in dem Kennfeld hinterlegt werden. Eine Adaption während des Betriebs ist vorteilhaft.

Nach einer Weiterbildung der Erfindung wird das Schlupf-Drehmoment aus der Summe von Beschleunigungsmoment, Kompressionsmoment und Verlustmoment bestimmt. Beschleunigungsmoment, Kompressionsmoment und Verlustmoment wirken sich jeweils auf den Drehzahlverlauf aus und bilden jeweils einen Teil des Schlupf-Drehmoments.

In einer vorteilhaften Weiterbildung der Erfindung erfolgt die Berücksichtigung des bestimmten beziehungsweise ermittelten Schlupf-Drehmoments derart, dass es von der elektrischen Maschine kompensiert wird. Durch die nunmehr genaue Bestimmung des Schlupf-Drehmoments ist es möglich, das auf den Antriebsstrang wirkende, von der Trennkupplung übertragene Schlupf-Drehmoment durch eine entsprechende Ansteuerung der elektrischen Maschine zu kompensieren. Dazu wird der elektrischen Maschine zusätzlich zu einem Fahrerwunschmoment zweckmäßigerweise das Schlupf-Drehmoment aufadddiert. Im rein elektrischen Fahrbetrieb wird somit ein besonders komfortables Starten des Verbrennungsmotors ermöglicht, da sich dies durch die Kompensation mittels der elektrischen Maschine beispielsweise nicht auf die Antriebsräder des Kraftfahrzeugs auswirkt.

Alternativ oder zusätzlich dazu erfolgt die Berücksichtigung des bestimmten Schlupf-Drehmoments vorteilhafterweise derart, dass die Trennkupplung in Abhängigkeit von dem bestimmten Schlupf-Drehmoment angesteuert wird. Da nunmehr durch das vorteilhafte Verfahren das Schlupf-Drehmoment genau bestimmt werden kann, ist es zweckmäßig, wenn die Trennkupplung entsprechend angesteuert wird, sodass das vorgegebene zu übertragende Schlupf-Drehmoment entsprechend genau eingestellt wird beziehungsweise werden kann. Adaptionsmechanismen für die Ansteuerung beziehungsweise für ein Betätigungssystem der Trennkupplung werden dadurch besonders vorteilhaft unterstützt.

Schließlich ist vorgesehen, dass die Berücksichtigung des bestimmten Schlupf-Drehmoments derart erfolgt, dass anhand des bestimmten Schlupf-Drehmoments die Funktion der Trennkupplung geprüft wird. Zu Diagnose-/Überwachungszwecken ist es nun mittels des hinreichend genau bestimmten Schlupf-Drehmoments möglich, Fehler im Betätigungssystem oder in der Ansteuerung der Trennkupplung zu detektieren. Hierzu wird vorteilhafterweise das bestimmte Schlupf-Drehmoment mit einem Referenzdrehmoment, das auf direkt an der Trennkupplung ermittelten Größen basiert, verglichen.

### Kurze Beschreibung der Zeichnungen

Im Folgenden soll die Erfindung anhand einiger Figuren näher erläutert werden.

Dazu zeigen
- Figur 1: eine Hybridantriebsvorrichtung eines Kraftfahrzeugs in einer schematischen Darstellung,
- Figur 2: ein Ausführungsbeispiel des vorteilhaften Verfahrens zum Betreiben der Hybridantriebsvorrichtung der Figur 1,
- Figur 3: einen beispielhaften Drehzahlverlauf eines Verbrennungsmotors und einer elektrischen Maschine der Hybridantriebsvorrichtung und
- Figur 4: einen beispielhaften Verlauf einiger durch das vorteilhafte Verfahren eingestellter/ermittelter Momente der Hybridantriebsvorrichtung.

### Ausführungsform(en) der Erfindung

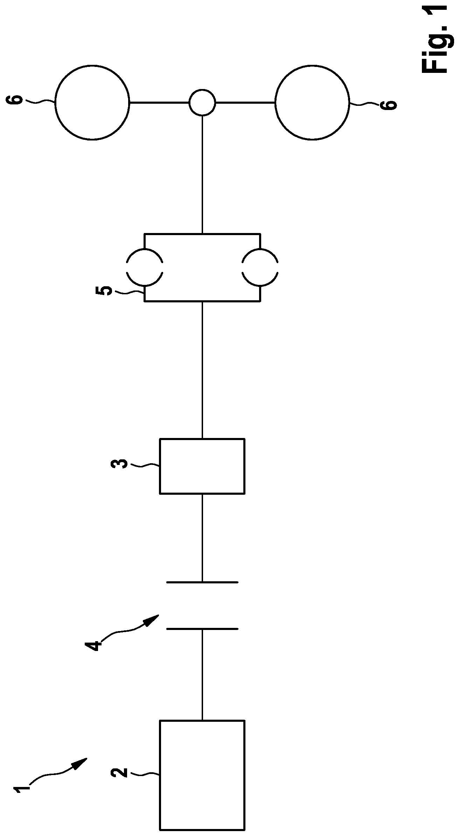

Die Figur 1 zeigt in einer schematischen Darstellung ein Ausführungsbeispiel einer Hybridantriebsvorrichtung 1, die als Parallel-Hybrid ausgebildet ist. Die Hybridantriebsvorrichtung 1 weist einen Verbrennungsmotor 2 sowie eine elektrische Maschine 3 auf, die mechanisch mittels einer Trennkupplung 4 miteinander wirkverbindbar sind. Wobei hierbei eine als Kurbelwelle ausgebildete Abtriebswelle des Verbrennungsmotors 2 mit einer Rotorwelle der elektrischen Maschine 3 mittels der Trennkupplung 4 wirkverbindbar sind. Die elektrische Maschine 3 ist weiterhin mit einem Drehmomentwandler 5 mechanisch wirkverbunden, welcher Teil eines hier nicht dargestellten Automatikgetriebes ist, über das Antriebsräder 6 des Kraftfahrzeugs angetrieben werden. Beim rein elektrischen Fahrbetrieb ist die Trennkupplung 4, wie in der Figur 1 dargestellt, geöffnet, sodass von ihr kein Drehmoment auf den Verbrennungsmotor 2 übertragen wird. Darüber hinaus ist der Verbrennungsmotor 2 beim rein elektrischen Fahrbetrieb im Stillstand. Die elektrische Maschine 3 erzeugt ein Antriebsdrehmoment, welches beim rein elektrischen Fahren derart vorgegeben wird, dass das Antriebsdrehmoment der elektrischen Maschine einem vom Fahrer (oder von einem Fahrerassistenzsystem, ESP oder Getriebeeingriffen bei Schaltungen und Ähnlichem) vorgegebenen Wunschmoment entspricht. Der gesamte Anteil des Antriebsdrehmoments der elektrischen Maschine wirkt auf den Antriebsstrang in Richtung der Antriebsräder 6. Eine optionale Überbrückungskupplung des Drehmomentwandlers 5 sollte vorteilhafterweise während eines Starts des Verbrennungsmotors 2 geöffnet sein. Ein Start des Verbrennungsmotors 2 aus dem rein elektrischen Fahrbetrieb heraus erfolgt durch Schließen der Trennkupplung 4 während der Fahrt, also bei drehender elektrischer Maschine 3 und zunächst stillstehendem Verbrennungsmotor 2.

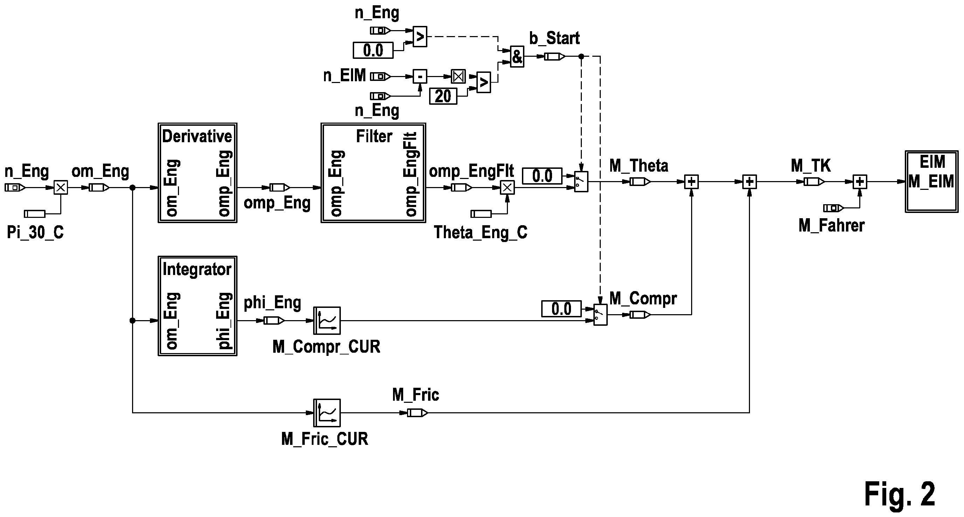

Anhand der Figuren 2, 3 und 4 soll nunmehr ein Ausführungsbeispiel des vorteilhaften Verfahrens zum Betreiben der Hybridantriebsvorrichtung 1 erläutert werden. Die Figur 2 zeigt hierzu schematisch eine Berechnungsvorschrift zur Ermittlung eines von der Trennkupplung 4 aktuell übertragenen Schlupf-Drehmoments M_TK während eines Starts des Verbrennungsmotors 2. Der Start des Verbrennungsmotors 2 erfolgt, wie bereits gesagt, durch Schließen der Trennkupplung 4 während des rein elektrischen Fahrbetriebs. Als Eingangsgrößen in der Berechnung werden die gemessenen Drehzahlen n_Eng des Verbrennungsmotors 2 und n_EIM der elektrischen Maschine 3 (in U/min.) verwendet. Ein logisches Signal b_Start zeigt einen aktiven Start des Verbrennungsmotors 2 an. Das Signal ist "true" sobald der Verbrennungsmotor 2 angedreht hat (n_Eng > 0) und solange der Absolutwert der Drehzahldifferenz zwischen der elektrischen Maschine 3 und dem Verbrennungsmotor 2 größer einer vorgebbaren Schwelle ist, die in diesem Ausführungsbeispiel 20 Umdrehungen pro Minute beträgt (| n_EIM - n_Eng| > 20 U/min).

Die Drehzahl n_Eng des Verbrennungsmotors 2 (in U/min) wird mit dem konstanten Multiplikationsfaktor Pi_30_C zunächst in eine Winkelgeschwindigkeit om_Eng (in rad/s) umgerechnet. Ein Block "Derivative" differenziert die Winkelgeschwindigkeit om_Eng und bildet die Winkelbeschleunigung omp_Eng des Verbrennungsmotors 2. Die Differentiation einer gemessenen Größe verstärkt meist das Signalrauschen. Aus diesem Grund ist ein Block "Filter" nachgeschaltet, der eine Filterung erster Ordnung (PT1) durchführt und eine gefilterte Winkelbeschleunigung omp_EngFlt des Verbrennungsmotors 2 ermittelt.

Beim Andrehen des Verbrennungsmotors 2 soll eine schnelle Annäherung der gefilterten Winkelbeschleunigung ompEngFlt an die ungefilterte Winkelbeschleunigung omp_Eng erfolgen. Dazu wird beim Andrehen vorteilhaft eine Initialisierung der gefilterten Winkelbeschleunigung omp_EngFlt auf einen über mehrere Startversuche gemittelten und in der Steuerung hinterlegten Anfangswert von omp_Eng durchgeführt. Die Initialisierung erfolgt bei der steigenden Flanke des Signals b_Start.

Aus der gefilterten Winkelbeschleunigung omp_EngFlt wird durch Multiplikation mit der reduzierten (auf die Kurbelwelle umgerechneten) Massenträgheit Theta_Eng_C von im Verbrennungsmotor 2 beschleunigten Massen, wie zum Beispiel Schwungrad, Kurbelwelle, Kolben, Nebenaggregate und Ähnliches, das zum Beschleunigen erforderliche Moment M_Theta berechnet. Dieses Moment bildet einen Teil des beim Start von der Trennkupplung 4 auf den Verbrennungsmotor 2 übertragenen Schlupf-Drehmoments M_TK.

Beim Andrehen des Verbrennungsmotors 2 erfolgen Kompressionen in seinen einzelnen Zylindern: Die direkt nach dem Andrehen zuerst komprimierenden Zylinder erfordern ein höheres Moment, da meist Umgebungsdruck im Saugrohr und damit eine hohe Füllung vorliegt. Die folgenden Zylinder nutzen dann für ihre Kompressionen die bei den Dekompressionen der vorausgegangenen (zuerst komprimierenden) Zylindern freiwerdende Energie. Somit ist direkt nach dem Andrehen ein zusätzliches Kompressionsmoment M_Compr erforderlich, das kurz nach dem Andrehen abfällt.

Eine Modellierung dieses Kompressionsmoments aus dem absoluten Startdrehwinkel und dem Verlauf des absoluten Drehwinkels des Verbrennungsmotors 2 beziehungsweise seiner Kurbelwelle während des Andrehens sowie der Füllung (zum Beispiel aus dem gemessenen Saugrohrdruck beziehungsweise dem Zylinderdruck) ist optimal.
Für das Ausführungsbeispiel wird davon ausgegangen, dass kein absolutes Drehwinkelsignal zur Verfügung steht. Der Einfluss der aktuellen Füllung ist der Einfachheit halber vernachlässigt. Es wird davon ausgegangen, dass sich der Verlauf des Kompressionsmoment M_Compr über dem relativen Drehwinkel bei unterschiedlichen Starts ähnlich verhält. Der relative Drehwinkel phi_Eng wird ab dem Andrehen des Verbrennungsmotors hochgezählt. Im Ausführungsbeispiel erfolgt bei stillstehendem Verbrennungsmotor im Block "Integrator" eine Initialisierung auf phi_Eng = 0. Ab dem Andrehen wird der relative Drehwinkel phi_Eng durch Integration der Winkelgeschwindigkeit om_Eng ermittelt und steigt an. Der Verlauf des Kompressionsmoment M_Compr über dem relativen Drehwinkel phi_Eng ist in einem Kennfeld M_Compr_CUR hinterlegt.

Zusätzlich kann ein Losbrechmoment, das zum Überwinden der Haftreibung bzw. der Mischreibung bei geringem Öldruck erforderlich ist, mit dem drehwinkelabhängigen Kompressionsmoment M_Compr nachgebildet werden.

Den dritten Anteil des beim Start von der Trennkupplung auf den Verbrennungsmotor übertragenen Moments M_TK bildet ein drehzahlabhängiges beziehungsweise von der Winkelgeschwindigkeit abhängiges Verlustmoment M_Fric, das durch im Wesentlichen interne mechanische Reibung und die Ladungswechselverluste des Verbrennungsmotors 2 entsteht. Der Verlauf des Verlustmoments M_Fric über Winkelgeschwindigkeit om_Eng ist in einem Kennfeld M_Fric_CUR hinterlegt. Eine Abhängigkeit von weiteren Parametern, zum Beispiel der Öltemperatur, ist der Einfachheit halber im Ausführungsbeispiel nach Figur 2 nicht berücksichtigt. Im Gegensatz zum drehwinkelabhängigen Kompressionsmoment M_Compr, das durch Effekte beim Andrehen des Verbrennungsmotors 2 entsteht, wirkt das Verlustmoment M_Fric bei bereits drehendem Verbrennungsmotor 2 und beträgt bei stillstehendem Verbrennungsmotor 2 M_Fric = 0 Nm
Die drei Anteile, das zum Beschleunigen erforderliche Moment M_Theta, das Kompressionsmoment M_Compr und das Verlustmoment M_Fric werden zum von der Trennkupplung 4 übertragenen Schlupf-Drehmoment M_TK addiert.

Im Ausführungsbeispiel wird das Schlupf-Drehmoment M_TK von der Elektromaschine 3 beim Start kompensiert, d.h. das Moment M_EIM der Elektromaschine 3 setzt sich beim Start in Summe aus dem Fahrerwunschmoment M_Fahrer und dem Schlupf-Drehmoment M_TK zusammen.

Vorteilhaft ist eine Adaption des Kompressionsmoments M_Compr und des Verlustmoments M_Fric, z.B. indem der Verlauf der Drehzahl n_EIM an der Elektromaschine 3 bei den Starts ausgewertet wird. Für eine Adaption des Kompressionsmoments kann der Verlauf von n_EIM beim Andrehen des Verbrennungsmotors 2, für eine Adaption des Verlustmoments der Verlauf nach dem Andrehen betrachtet werden. Eine Abnahme von n_EIM bei aktiver Kompensation bedeutet zum Beispiel, dass das in der Steuerung hinterlegte Kompressions- beziehungsweise Verlustmoment zu klein ist und mittels Adaption erhöht werden muss. Für eine hohe Adaptionsgenauigkeit können zusätzlich die Drehzahlverhältnisse am Drehmomentwandler 5 betrachtet werden. Vorteilhaft ist weiter eine Adaption des in der Steuerung hinterlegten Anfangswerts für die Initialisierung der gefilterten Winkelbeschleunigung omp_EngFlt beim Andrehen.

Die Adaptionen sind möglich, da im Ausführungsbeispiel das erfindungsgemäße ermittelte Schlupf-Drehmoment M_TK durch die Elektromaschine 3 kompensiert wird und somit eine Rückwirkung auf die Drehzahl n_EIM an der Elektromaschine 3 besteht. Die Adaptionen führen zu einem komfortablen Fahrverhalten und verbessern zudem die Genauigkeit in der Bestimmung des Schlupf-Drehmoments M_TK.

Vor und nach dem Start (Signal b_Start = "false") werden das Kompressionsmoment M_Compr und das zum Beschleunigen erforderliche Moment M_Theta auf Null gesetzt. Das Verlustmoment ist bei stillstehendem Verbrennungsmotor M_Fric = 0 Nm. Das bei den ersten Zündungen des Verbrennungsmotors 2 infolge der Verbrennungen entstehende Drehmoment wird zusätzlich in das von der Trennkupplung 4 übertragene Schlupf-Drehmoment M_TK eingerechnet, um eine korrekte Kompensation zu erreichen. Eine entsprechende Einrechnungsstelle ist in Figur 2 nicht dargestellt.

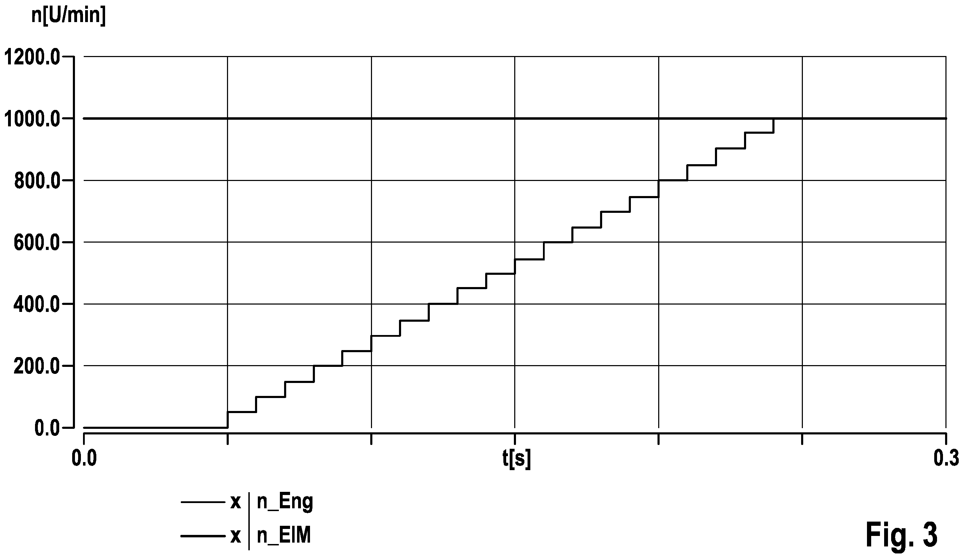

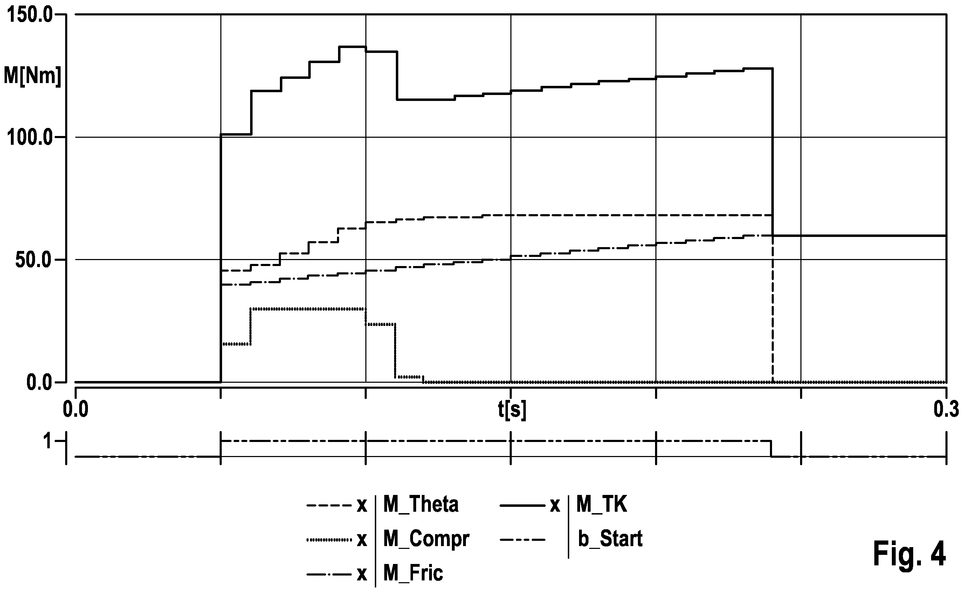

Die Figur 4 zeigt beispielhaft Simulationsergebnisse für stark idealisierte Drehzahlverläufe nach Figur 3. Die Drehzahl n_EIM beträgt konstant 1000 U/min, während die Drehzahl n_Eng des Verbrennungsmotors 2 beim Start durch Schließen der Trennkupplung 4 rampenförmig von 0 U/min auf 1000 U/min zunimmt.

In Figur 4 sind die zuvor beschriebenen Momente aufgetragen. Bis zum Zeitpunkt t = 0.05 Sekunden sind alle Momente gleich Null. Beim Andrehen des Verbrennungsmotors 2 zum Zeitpunkt t = 0.05 wird das Signal b_Start = "true".

Die gefilterte Winkelbeschleunigung omp_EngFlt des Verbrennungsmotors 2 springt infolge der Initialisierung des Filters auf den in der Steuerung hinterlegten Anfangswert und nähert sich dann der ungefilterten Winkelbeschleunigung omp_Eng. Das zum Beschleunigen erforderliche Schlupf-Drehmoment M_Theta zeigt ein entsprechendes Verhalten.

Bei erreichter Drehzahlgleichheit von Elektromaschine 3 und Verbrennungsmotor 2 zum Zeitpunkt t = 0.24 Sekunden wird das Signal b_Start = "false", wodurch auch M_Theta auf 0 Nm springt. Ab diesem Zeitpunkt entspricht das Moment M_TK dem Verlustmoment M_Fric.

Die erfindungsgemäße Steuerung kann auch bei einem Stopp des Verbrennungsmotors 2 sinnvoll eingesetzt werden. Zum Beispiel falls der Verbrennungsmotor 2 sich in der Schubabschaltung befindet und durch Öffnen der Trennkupplung 4 abgestellt wird, verbunden mit einer schnellen Änderung des von der Trennkupplung 4 übertragenen Schlupf-Drehmoments M_TK.Das Schlupf-Drehmoment M_TK setzt sich dabei aus dem bei der Verzögerung der Massenträgheiten des Verbrennungsmotors 2 entstehenden Schlupf-Drehmoment M_Theta und dem Verlustmoment M_Fric zusammen.

## Patentansprüche

1. Verfahren zum Betreiben einer Hybridantriebsvorrichtung, insbesondere für ein Kraftfahrzeug, die mindestens einen Verbrennungsmotor (2) und mindestens eine elektrische Maschine (3) aufweist, wobei der Verbrennungsmotor und die elektrische Maschine mittels einer Trennkupplung (4) mechanisch miteinander wirkverbindbar sind und ein von der Trennkupplung übertragenes Schlupf-Drehmoment ermittelt wird, **dadurch gekennzeichnet, dass** das Schlupf-Drehmoment in Abhängigkeit vom Drehzahlverlauf einer Abtriebswelle des Verbrennungsmotors und von einem Kompressionsmoment des Verbrennungsmotors zumindest beim Starten und/oder Stoppen des Verbrennungsmotors bestimmt und beim Betreiben der Hybridantriebsvorrichtung berücksichtigt wird.

2. Verfahren nach Anspruch 1, **dadurch gekennzeichnet, dass** aus dem Drehzahlverlauf eine Winkelgeschwindigkeit und/oder eine Winkelbeschleunigung bestimmt werden.

3. Verfahren nach einem der vorhergehenden Ansprüche, **dadurch gekennzeichnet, dass** das Schlupf-Drehmoment in Abhängigkeit von einem von der Massenträgheit von beschleunigten Massen des Verbrennungsmotors bewirkten Beschleunigungsmoment bestimmt wird.

4. Verfahren nach einem der vorhergehenden Ansprüche, **dadurch gekennzeichnet, dass** das Schlupf-Drehmoment in Abhängigkeit von einem Verlustmoment des Verbrennungsmotors bestimmt wird.

5. Verfahren nach einem der vorhergehenden Ansprüche, **dadurch gekennzeichnet, dass** das Verlustmoment in Abhängigkeit von der Winkelgeschwindigkeit, insbesondere mittels eines Kennfelds bestimmt wird.

6. Verfahren nach einem der vorhergehenden Ansprüche, **dadurch gekennzeichnet, dass** das Schlupf-Drehmoment aus der Summe von Beschleunigungsmoment, Kompressionsmoment und Verlustmoment bestimmt wird.

7. Verfahren nach einem der vorhergehenden Ansprüche, **dadurch gekennzeichnet, dass** die Berücksichtigung des bestimmten Schlupf-Drehmoments derart erfolgt, dass es von der elektrischen Maschine kompensiert wird.

8. Verfahren nach einem der vorhergehenden Ansprüche, **dadurch gekennzeichnet, dass** die Berücksichtigung des bestimmten Schlupf-Drehmoments derart erfolgt, dass die Trennkupplung in Abhängigkeit von dem bestimmten Schlupf-Drehmoment angesteuert wird.

9. Verfahren nach einem der vorhergehenden Ansprüche, **dadurch gekennzeichnet, dass** die Berücksichtigung des bestimmten Schlupf-Drehmoments derart erfolgt, dass anhand des bestimmten Schlupf-Drehmoments die Funktion der Trennkupplung geprüft wird.

## Claims

1. Method for operating a hybrid drive device, in particular for a motor vehicle, which hybrid drive device has at least one internal combustion engine (2) and at least one electric machine (3), wherein the internal combustion engine and the electric machine can be operatively connected to one another mechanically by means of a clutch (4), and a slip torque which is transmitted by the clutch is detected,
**characterized in that** the slip torque is determined as a function of the rotational speed profile of an output shaft of the internal combustion engine and of a compression torque of the internal combustion engine, at least when the internal combustion engine starts and/or stops, and is taken into account in the operation of the hybrid drive device.

2. Method according to Claim 1, **characterized in that** an angular speed and/or an angular acceleration are determined from the rotational speed profile.

3. Method according to one of the preceding claims, **characterized in that** the slip torque is determined as a function of an acceleration torque which is brought about the mass inertia of accelerated masses of the internal combustion engine.

4. Method according to one of the preceding claims, **characterized in that** the slip torque is determined as a function of a loss torque of the internal combustion engine.

5. Method according to one of the preceding claims, **characterized in that** the loss torque is determined as a function of the angular speed, in particular by means of a characteristic diagram.

6. Method according to one of the preceding claims, **characterized in that** the slip torque is determined from the sum of the acceleration torque, compression torque and loss torque.

7. Method according to one of the preceding claims, **characterized in that** the determined slip torque is taken into account in such a way that it is compensated by the electric machine.

8. Method according to one of the preceding claims, **characterized in that** the determined slip torque is taken into account in such a way that the clutch is actuated as a function of the determined slip torque.

9. Method according to one of the preceding claims, **characterized in that** the determined slip torque is taken into account in such a way that the function of the clutch is tested on the basis of the determined slip torque.

## Revendications

1. Procédé pour faire fonctionner un dispositif d'entraînement hybride, en particulier pour un véhicule automobile, qui présente au moins un moteur à combustion interne (2) et au moins un moteur électrique (3), le moteur à combustion interne et le moteur électrique pouvant être reliés fonctionnellement mécaniquement l'un à l'autre au moyen d'un embrayage de coupure (4), et un couple de glissement transmis par l'embrayage de coupure étant déterminé, **caractérisé en ce que** le couple de glissement est déterminé en fonction de l'allure de la vitesse de rotation d'un arbre de prise de force du moteur à combustion interne et d'un couple de compression du moteur à combustion interne au moins au démarrage et/ou à l'arrêt du moteur à combustion interne et est pris en compte lors du fonctionnement du dispositif d'entraînement hybride.

2. Procédé selon la revendication 1, **caractérisé en ce qu'**une vitesse angulaire et/ou une accélération angulaire sont déterminées à partir de l'allure de la vitesse de rotation.

3. Procédé selon l'une quelconque des revendications précédentes, **caractérisé en ce que** le couple de glissement est déterminé en fonction d'un couple d'accélération provoqué par l'inertie de masse de masses accélérées du moteur à combustion interne.

4. Procédé selon l'une quelconque des revendications précédentes, **caractérisé en ce que** le couple de glissement est déterminé en fonction d'un couple de perte du moteur à combustion interne.

5. Procédé selon l'une quelconque des revendications précédentes, **caractérisé en ce que** le couple de perte est déterminé en fonction de la vitesse angulaire, en particulier au moyen d'un champ caractéristique.

6. Procédé selon l'une quelconque des revendications précédentes, **caractérisé en ce que** le couple de glissement est déterminé à partir de la somme du couple d'accélération, du couple de compression et du couple de perte.

7. Procédé selon l'une quelconque des revendications précédentes, **caractérisé en ce que** la prise en compte du couple de glissement déterminé s'effectue de telle sorte que celui-ci soit compensé par le moteur électrique.

8. Procédé selon l'une quelconque des revendications précédentes, **caractérisé en ce que** la prise en compte du couple de glissement déterminé s'effectue de telle sorte que l'embrayage de coupure soit commandé en fonction du couple de glissement déterminé.

9. Procédé selon l'une quelconque des revendications précédentes, **caractérisé en ce que** la prise en compte du couple de glissement déterminé s'effectue de telle sorte que la fonction de l'embrayage de coupure soit contrôlée à l'aide du couple de glissement déterminé.
